# EUROPÄISCHE PATENTSCHRIFT

(11) **EP 3 643 151 B1**
(45) Veröffentlichungstag und Bekanntmachung des Hinweises auf die Patenterteilung: **16.06.2021**
(21) Anmeldenummer: 19202771.2
(22) Anmeldetag: 11.10.2019
(51) Int. Cl.: A01B 59/00, A01B 59/06

(54) **KRAFTHEBER FÜR EINEN LANDWIRTSCHAFTLICHEN TRAKTOR**
POWER LIFT FOR AN AGRICULTURAL TRACTOR
MÉCANISME DE LEVAGE POUR UN TRACTEUR AGRICOLE

(30) Priorität: 26.10.2018 DE 102018218408
(43) Veröffentlichungstag der Anmeldung: 29.04.2020
(73) Patentinhaber: Deere & Company, Moline, IL 61265 (US)
(72) Erfinder: Heitlinger, Martin, 68163 Mannheim (DE); Patino, Mario, 68163 Mannheim (DE)
(74) Vertreter: Dehnhardt, Florian Christopher

(56) Entgegenhaltungen:
- EP-A1- 3 219 183
- CN-A- 101 823 414
- DE-A1- 4 426 925
- DE-U1- 29 719 747

## Beschreibung

Die Erfindung bezieht sich auf einen Kraftheber für einen landwirtschaftlichen Traktor, mit einer an dem landwirtschaftlichen Traktor montierbaren Tragestruktur, an der linke und rechte Unterlenker sowie ein zentraler Oberlenker schwenkbeweglich angebracht sind, wobei sowohl die Unterlenker wie auch der Oberlenker zugehörige Kupplungselemente zur Anbringung eines landwirtschaftlichen Anbaugeräts aufweisen.

Derartige Kraftheber sind in Gestalt von Dreipunkt-Geräteanbauten an landwirtschaftlichen Traktoren weit verbreitet, siehe z.B. DE4426925A1. Der meist im Heckbereich des landwirtschaftlichen Traktors angebrachte Kraftheber umfasst ein hydraulisches Hubwerk, das linke und rechte hydraulische Hubzylinder aufweist, die der Schwenkbetätigung zugehöriger Hubarme dienen, die mittels einer im Heckbereich des landwirtschaftlichen Traktors gelagerten Hubwelle miteinander drehverbunden sind. An den freien Enden der Hubarme ist jeweils eine Hubstrebe angebracht, an der wiederum einer der beiden Unterlenker eingehängt ist, sodass sich die beiden Unterlenker synchron durch Ein- bzw. Ausfahren der hydraulischen Hubzylinder gegenüber dem Erdboden anheben bzw. absenken lassen. Aufgrund der Vielzahl beweglicher Teile sind Kosten und Bauraumbedarf eines solchen Krafthebers vergleichsweise hoch.

Es ist daher Aufgabe der vorliegenden Erfindung, einen Kraftheber der eingangs genannten Art hinsichtlich seiner Bauweise bei gleicher Leistungsfähigkeit bzw. gleichem Hubvermögen baulich zu vereinfachen.

Diese Aufgabe wird durch einen Kraftheber für einen landwirtschaftlichen Traktor mit den Merkmalen des Patentanspruchs 1 gelöst.

Der Kraftheber für einen landwirtschaftlichen Traktor umfasst eine an dem landwirtschaftlichen Traktor montierbare Tragestruktur, an der linke und rechte Unterlenker sowie ein zentraler Oberlenker schwenkbeweglich angebracht sind, wobei sowohl die Unterlenker wie auch der Oberlenker zugehörige Kupplungselemente zur Anbringung eines landwirtschaftlichen Anbaugeräts aufweisen. Die beiden Unterlenker sind über eine mit einer Unterlenkerschwenkachse fluchtende Hubwelle drehbar miteinander gekoppelt, wobei sich die beiden Unterlenker mittels eines zwischen wenigstens einem der Unterlenker und einer Abstützstelle der Tragestruktur verlaufenden Stellelements gemeinsam um die Unterlenkerschwenkachse in Bezug auf die Tragestruktur verschwenken lassen.

Der Wegfall der beiden Hubarme sowie der Hubstreben konventioneller Kraftheber führt - ohne Einbußen hinsichtlich der Leistungsfähigkeit bzw. des Hubvermögens - zu einer besonders einfachen und platzsparenden Bauweise des erfindungsgemäßen Krafthebers.

Die Tragestruktur ist beispielsweise im Heckbereich des landwirtschaftlichen Traktors durch ein Differentialgehäuse oder dergleichen gebildet, wobei die Hubwelle mittels zugehöriger Drehlager an dem Differentialgehäuse angebracht ist. Die von der Hubwelle definierte Unterlenkerschwenkachse verläuft dabei in Querrichtung des landwirtschaftlichen Traktors.

Die an den Unterlenkern bzw. dem Oberlenker vorgesehenen Kupplungselemente sind in der Regel durch lösbare Fanghaken gebildet, die der Aufnahme korrespondierender Kupplungsstellen des landwirtschaftlichen Anbaugeräts dienen. Genauer gesagt weist das landwirtschaftliche Anbaugerät einen sogenannten A-Rahmen mit linken und rechten unteren Kupplungsstellen sowie einer zentralen oberen Kupplungsstelle auf.

Vorteilhafte Ausgestaltungen des erfindungsgemäßen Krafthebers gehen aus den Unteransprüchen hervor.

Um den beim Betrieb bestimmter landwirtschaftlicher Anbaugeräte erforderlichen Seitenfreiheitsgrad am Kraftheber bereitzustellen, ist es denkbar, dass jeder der beiden Unterlenker um eine senkrecht zur Unterlenkerschwenkachse verlaufende Querachse schwenkbar an der Hubwelle angelenkt ist. Zur Anlenkung weist jeder der beiden Unterlenker an einem traktorzugewandten Ende ein die Hubwelle umgreifendes Gabelgelenk auf, das mittels eines Gelenkbolzens in einer Querbohrung der Hubwelle aufgenommen ist. Der Seitenfreiheitsgrad kann mittels eines zwischen dem Unterlenker und der Tragestruktur verlaufenden Seitenstabilisators gezielt eingeschränkt werden.

Bei dem Stellelement handelt es sich um einen hydraulischen Hubzylinder, der mit einem unteren Ende an dem Unterlenker und mit einem oberen Ende an der Abstützstelle der Tragestruktur angelenkt ist. Die Abstützstelle ist erfindungsgemäss in Gestalt eines auf einer Oberseite des Differentialgehäuses angebrachten galgenförmigen Halteschenkels ausgebildet, an dem der hydraulische Hubzylinder mit seinem oberen Ende eingehängt ist. Die galgenförmige Ausbildung des Halteschenkels ermöglicht eine erhöhte obere Anlenkung des hydraulischen Hubzylinders, was wiederum zu einem entsprechend erweiterten Stellweg der beiden Unterlenker führt. Der hydraulische Hubzylinder selbst kann einfach- oder doppeltwirkend ausgebildet sein.

Des Weiteren besteht die Möglichkeit, dass an wenigstens einem der beiden Unterlenker ein Justiermittel zur Höhenanpassung des Kupplungselements unabhängig von einer mittels des wenigstens einen Stellelements ausgeführten Verschwenkbewegung vorgesehen ist. Dieses ermöglicht die Kompensation einer zwischen den unteren Kupplungsstellen des landwirtschaftlichen Anbaugeräts vorliegenden vertikalen Fehlstellung.

Der wenigstens eine Unterlenker kann der Länge nach in ein der Tragestruktur zugeordnetes erstes Unterlenkersegment und ein das Kupplungselement tragendes zweites Unterlenkersegment unterteilt sein, wobei sich das zweite Unterlenkersegment mittels des Justiermittels gegenüber dem ersten Unterlenkersegment vertikal verschwenken und in unterschiedlichen Schwenkstellungen arretieren lässt. Das Justiermittel umfasst beispielsweise ein die beiden Unterlenkersegmente verbindendes Bolzen- oder Kniegelenk sowie ein Arretiermittel zur Festlegung einer über das Bolzen- oder Kniegelenk ausgeführten Schwenkbewegung.

Dabei ist es möglich, dass das Justiermittel zum Verschwenken und Arretieren der beiden Unterlenkersegmente einen selbstblockierenden Spindelantrieb aufweist. Der Spindelantrieb lässt sich beispielsweise mittels einer Kurbel von Hand betätigen, erlaubt also ein kraftsparendes stufenloses Verschwenken der beiden Unterlenkersegmente, wobei diese aufgrund der selbstblockierenden Eigenschaften des Spindelantriebs stets in ihrer jeweiligen Schwenkstellung arretiert sind. Der Spindelantrieb umfasst insbesondere eine mittels der Kurbel in Drehung versetzbare Gewindespindel, die sich innerhalb einer an dem ersten Unterlenkersegment ausgebildeten Halterung abstützt und in einen in dem zweiten Unterlenkersegment gelagerten Gewindeeinsatz eingreift. Der Vollständigkeit halber sei angemerkt, dass anstelle einer manuellen Betätigung des Spindelantriebs mittels einer Kurbel auch die Verwendung eines elektromotorischen Antriebs oder dergleichen möglich ist.

Andererseits ist es auch vorstellbar, dass das Justiermittel eine lösbare Bolzenverbindung zum Arretieren der beiden Unterlenkersegmente in einer von mehreren festen Schwenkstellungen aufweist. Die an dem ersten Unterlenkersegment ausgebildete Halterung umfasst in diesem Fall mehrere, mit den einzelnen Schwenkstellungen korrespondierende Öffnungen zur Aufnahme eines Montagebolzens, der zur Arretierung des zweiten Unterlenkersegments in eine in diesem vorgesehene Gegenöffnung eingreift. Der Haltebolzen kann dabei an seinem freien Ende mittels eines Splints oder dergleichen gegenüber einem unbeabsichtigten Herausfallen aus der Halterung gesichert sein.

Der erfindungsgemäße Kraftheber wird im Folgenden anhand der beigefügten Zeichnungen näher erläutert, wobei übereinstimmende Bezugszeichen baulich identische oder bezüglich ihrer Funktion vergleichbare Komponenten bezeichnen. Es zeigen:
- Fig. 1: ein Ausführungsbeispiel des erfindungsgemäßen Krafthebers für einen landwirtschaftlichen Traktor,
- Fig. 2: ein von dem Kraftheber gemäß Fig. 1 umfasstes Justiermittel entsprechend einer ersten Ausgestaltung, und
- Fig. 3: ein von dem Kraftheber gemäß Fig. 1 umfasstes Justiermittel entsprechend einer zweiten Ausgestaltung.

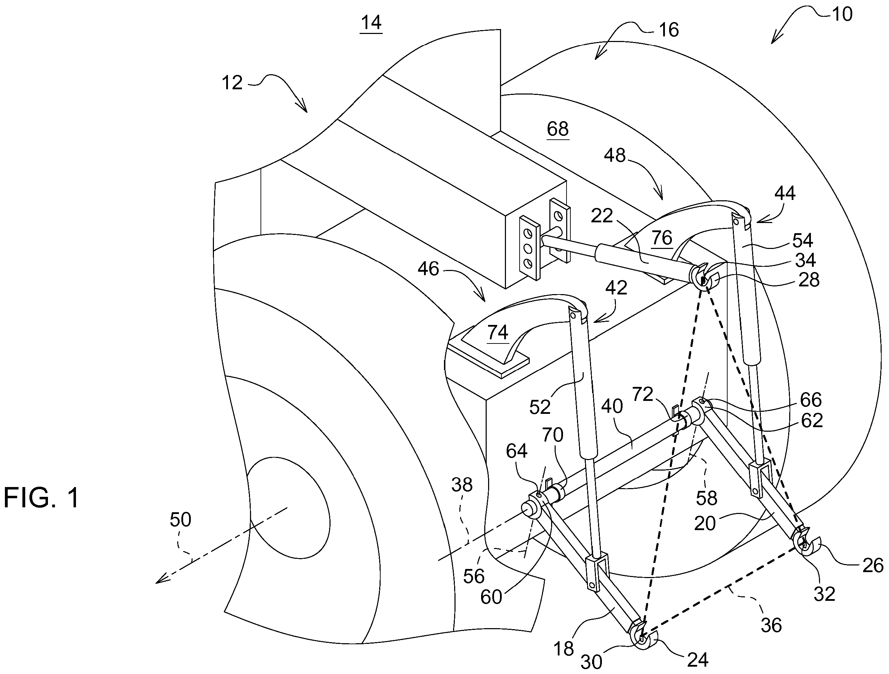

Fig. 1 zeigt einen Kraftheber 10, der im Heckbereich 12 eines landwirtschaftlichen Traktors 14 angebracht ist. Der als Dreipunkt-Geräteanbau ausgebildete Kraftheber 10 umfasst eine an dem landwirtschaftlichen Traktor 14 montierte Tragestruktur 16, an der linke und rechte Unterlenker 18, 20 sowie ein zentraler Oberlenker 22 schwenkbeweglich angebracht sind. Sowohl die Unterlenker 18, 20 wie auch der Oberlenker 22 weisen an ihren freien Enden zugehörige Kupplungselemente 24, 26, 28 zur Anbringung eines (nicht dargestellten) landwirtschaftlichen Anbaugeräts auf. Die an den Unterlenkern 18, 20 bzw. dem Oberlenker 22 vorgesehenen Kupplungselemente 24, 26 bzw. 28 sind durch lösbare Fanghaken gebildet, die der Aufnahme korrespondierender Kupplungsstellen 30, 32 bzw. 34 des landwirtschaftlichen Anbaugeräts dienen. Genauer gesagt weist das landwirtschaftliche Anbaugerät einen sogenannten A-Rahmen 36 mit linken und rechten unteren Kupplungsstellen 30, 32 sowie einer zentralen oberen Kupplungsstelle 34 auf. Die Kupplungsstellen 30, 32, 34 sind hierbei durch mit den Fanghaken korrespondierende Kupplungskugeln gebildet.

Die beiden Unterlenker 18, 20 sind über eine mit einer Unterlenkerschwenkachse 38 fluchtende Hubwelle 40 drehbar miteinander gekoppelt, wobei sich die beiden Unterlenker 18, 20 mittels linker und rechter Stellelemente 42, 44, die zwischen den Unterlenkern 18, 20 und einer jeweiligen Abstützstelle 46, 48 der Tragestruktur 16 verlaufen, gemeinsam um die Unterlenkerschwenkachse 38 in Bezug auf die Tragestruktur 16 verschwenken lassen. Die von der Hubwelle 40 definierte Unterlenkerschwenkachse 38 verläuft dabei in Querrichtung 50 des landwirtschaftlichen Traktors 14.

Beispielsgemäß ist jedem der Unterlenker 18, 20 ein eigenes Stellelement 42, 44 zugeordnet. Aufgrund der über die Hubwelle 40 hergestellten starren Kopplung der Unterlenker 18, 20 genügt es jedoch prinzipiell auch, lediglich ein einzelnes Stellelement vorzusehen. Eine derartige Konfiguration bietet sich bei vergleichsweise geringen Lastanforderungen an, zum Beispiel für den Fall einer Verwendung in Kleintraktoren.

Bei den Stellelementen 42, 44 handelt es sich um hydraulische Hubzylinder 52, 54, die Bestandteil eines hydraulischen Hubwerks des Krafthebers 10 sind, wobei diese jeweils mit einem unteren Ende an dem Unterlenker 18, 20 und mit einem oberen Ende an der Abstützstelle 46, 48 der Tragestruktur 16 angelenkt ist. Die hydraulischen Hubzylinder 53, 54 selbst sind einfach- oder doppeltwirkend ausgebildet. Letzteres erlaubt es, gezielt eine Druckkraft in Richtung einer zu bearbeitenden Feldoberfläche auszuüben.

Um den beim Betrieb bestimmter landwirtschaftlicher Anbaugeräte erforderlichen Seitenfreiheitsgrad am Kraftheber 10 bereitzustellen, ist jeder der beiden Unterlenker 18, 20 schwenkbar um eine senkrecht zur Unterlenkerschwenkachse 38 verlaufende Querachse 56, 58 an der Hubwelle 40 angelenkt. Zur Anlenkung weist jeder der beiden Unterlenker 18, 20 an einem traktorzugewandten Ende ein die Hubwelle 40 umgreifendes Gabelgelenk 60, 62 auf, das mittels eines Gelenkbolzens 64, 66 in einer Querbohrung der Hubwelle 40 aufgenommen ist. Der solchermaßen bereitgestellte Seitenfreiheitsgrad lässt sich mittels eines zwischen dem Unterlenker 18, 20 und der Tragestruktur 16 verlaufenden (nicht dargestellten) Seitenstabilisators gezielt einschränken. Dies ist beispielsweise bei der Durchführung von Straßentransportfahrten erforderlich, um ein unkontrolliertes Hin- und Herschwingen eines an dem Kraftheber 10 angebrachten landwirtschaftlichen Anbaugeräts zu unterbinden.

Im vorliegenden Fall ist die Tragestruktur 16 durch ein Differentialgehäuse 68 des landwirtschaftlichen Traktors 14 gebildet, wobei die Hubwelle 40 mittels zugehöriger Drehlager 70, 72 an dem Differentialgehäuse 68 angebracht ist. Bei den Drehlagern 70, 72 handelt es sich um Gleitlager oder Kugel- bzw. Walzenlager.

Die Abstützstellen 46, 48 sind in Gestalt von sich auf einer Oberseite des Differentialgehäuses 68 angebrachten galgenförmigen Halteschenkeln 74, 76 ausgebildet, an denen die hydraulischen Hubzylinder 52, 54 mit ihrem oberen Ende eingehängt sind. Die galgenförmige Ausbildung der Halteschenkel 74, 76 ermöglicht eine erhöhte obere Anlenkung der hydraulischen Hubzylinder 44, 46, was wiederum zu einem entsprechend erweiterten Stellweg der Unterlenker 18, 20 führt. Die Halteschenkel 74, 76 sind mittels mehrerer Schraubbolzen auf der Oberseite des Differentialgehäuses 68 angeflanscht.

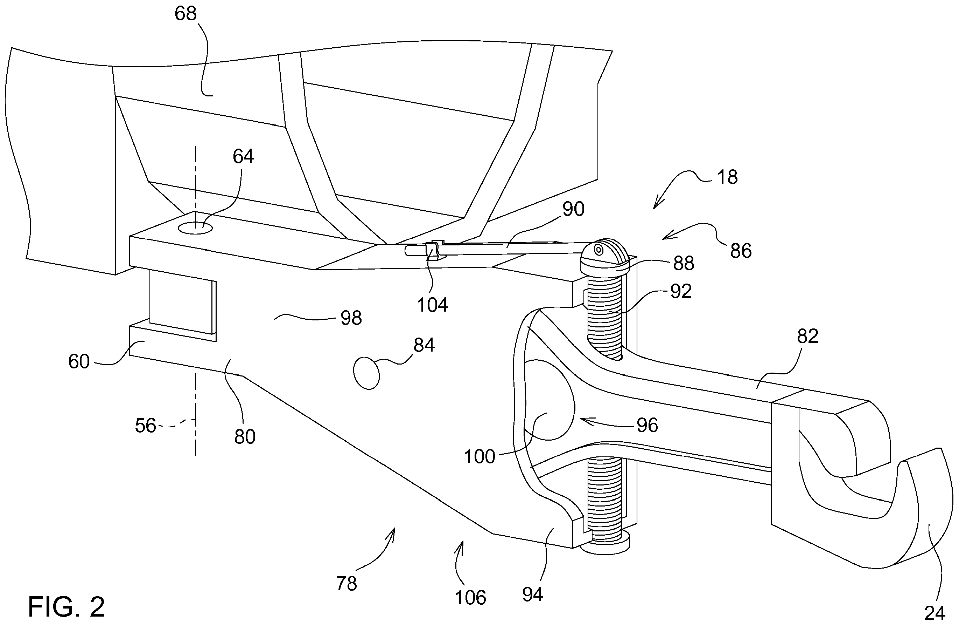

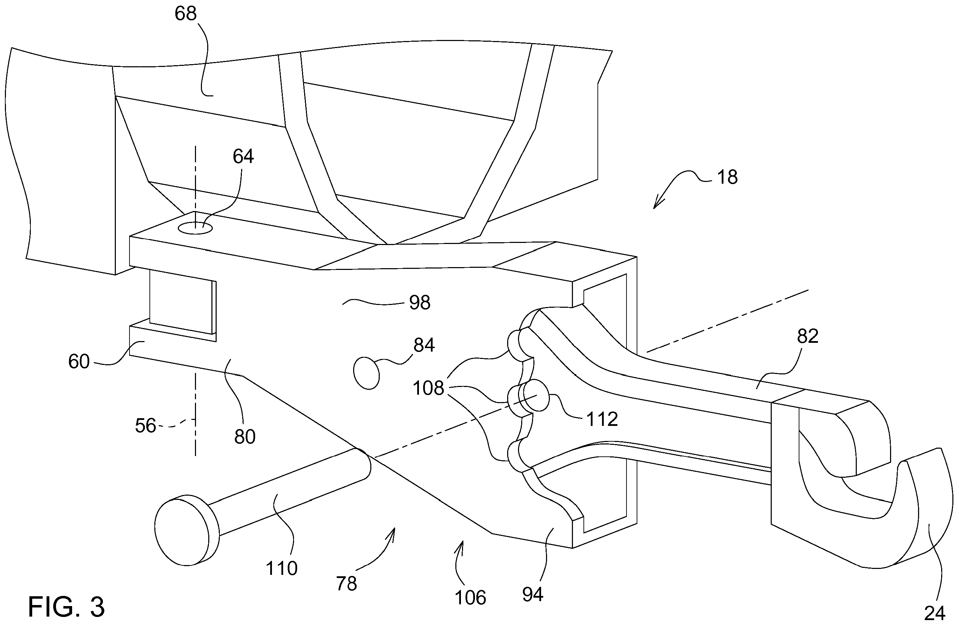

Gemäß Fig. 2 bzw. 3 ist stellvertretend am linken Unterlenker 18 ein Justiermittel 78 zur Höhenanpassung des Kupplungselements 24 unabhängig von einer mittels der hydraulischen Hubzylinder 52, 54 ausgeführten Verschwenkbewegung vorgesehen. Dieses ermöglicht die Kompensation einer zwischen den unteren Kupplungsstellen 30, 32 des landwirtschaftlichen Anbaugeräts vorliegenden vertikalen Fehlstellung. Aus Gründen der Übersichtlichkeit ist in Fig. 2 bzw. 3 lediglich der linke Unterlenker 18 dargestellt, der rechte Unterlenker 20 ist bezüglich des Justiermittels 78 gleichartig bzw. spiegelbildlich ausgebildet.

Der Unterlenker 18 ist der Länge nach in ein der Tragestruktur 16 zugeordnetes erstes Unterlenkersegment 80 und ein das Kupplungselement 24 tragendes zweites Unterlenkersegment 82 unterteilt. Das zweite Unterlenkersegment 82 lässt sich mittels des Justiermittels 78 vertikal verschwenken und in unterschiedlichen Schwenkstellungen arretieren. Hierzu umfasst das Justiermittel 78 ein die beiden Unterlenkersegmente 80, 82 verbindendes Bolzengelenk 84 sowie ein Arretiermittel 86 zur Festlegung einer über das Bolzengelenk 84 ausgeführten Schwenkbewegung.

Bezüglich der technischen Umsetzung des Justiermittels 78, insbesondere des von diesem umfassten Arretiermittels 86, gibt es nun unterschiedliche Möglichkeiten.

Fig. 2 zeigt eine Schnittdarstellung einer ersten Ausgestaltung des Justiermittels 78, bei der das Justiermittel 78 zum Verschwenken und Arretieren der beiden Unterlenkersegmente 82, 84 einen selbstblockierenden Spindelantrieb 88 aufweist. Der Spindelantrieb 88 lässt sich mittels einer Kurbel 90 von Hand betätigen, erlaubt also ein kraftsparendes stufenloses Verschwenken der beiden Unterlenkersegmente 80, 82, wobei diese aufgrund der selbstblockierenden Eigenschaften des Spindelantriebs 88 stets in ihrer jeweiligen Schwenkstellung arretiert sind. Der Spindelantrieb 88 umfasst eine mittels der Kurbel 90 in Drehung versetzbare Gewindespindel 92, die sich innerhalb einer an dem ersten Unterlenkersegment 80 ausgebildeten Halterung 94 abstützt und in einen in dem zweiten Unterlenkersegment 82 gelagerten Gewindeeinsatz 96 eingreift. Die Halterung 94 besteht aus einem an dem ersten Unterlenkersegment 80 einstückig ausgeformten schuhförmigen Gehäuse 98, das zugleich das innenliegende Bolzengelenk 84 schützend umgibt. Aus Gründen der besseren Sichtbarkeit ist das Gehäuse 98 im Bereich des Spindelantriebs 88 ausgeschnitten dargestellt. Der Gewindeeinsatz 96 ist in Gestalt einer Gewindemuffe 100 drehbar innerhalb einer an dem zweiten Unterlenkersegment 82 vorgesehenen Ausnehmung 102 gelagert. Die Kurbel 90 lässt sich in nicht benutztem Zustand in eine Parkposition verbringen und dort mittels einer an der Halterung 94 montierten Federklemme 104 sichern.

Fig. 3 zeigt eine Schnittdarstellung einer zweiten Ausgestaltung des Justiermittels 78, bei der das Justiermittel 78 eine lösbare Bolzenverbindung 106 zum Arretieren der beiden Unterlenkersegmente 80, 82 in einer von mehreren festen Schwenkstellungen aufweist. Die an dem ersten Unterlenkersegment 80 ausgebildete Halterung 94 umfasst in diesem Fall mehrere, mit den einzelnen Schwenkstellungen korrespondierende Öffnungen 108 zur Aufnahme eines Montagebolzens 110, der zur Arretierung des zweiten Unterlenkersegments 82 in eine in diesem vorgesehene Gegenöffnung 112 eingreift. Der Montagebolzen 110 ist an seinem freien Ende mittels eines (nicht dargestellten) Splints gegenüber einem unbeabsichtigten Herausfallen aus der Halterung 94 gesichert. Auch hier ist das Gehäuse 98 ausgeschnitten dargestellt, sodass die innenliegende Gegenöffnung 112 sichtbar ist.

Zum Verstellen des zweiten Unterlenkersegments 82 wird der Montagebolzen 110 zunächst aus der Halterung 94 entfernt, das zweite Unterlenkersegment 82 in die gewünschte Schwenkstellung verbracht, bis die Gegenöffnung 112 im zweiten Unterlenkersegment 82 mit den gewünschten Öffnungen 118 in der Halterung 94 fluchtet, sowie anschließend durch Hindurchstecken des Montagebolzens 110 arretiert.

## Patentansprüche

1. Kraftheber für einen landwirtschaftlichen Traktor, mit einer an dem landwirtschaftlichen Traktor (14) montierbaren Tragestruktur (16), an der linke und rechte Unterlenker (18, 20) sowie ein zentraler Oberlenker (22) schwenkbeweglich angebracht sind, wobei sowohl die Unterlenker (18, 20) wie auch der Oberlenker (22) zugehörige Kupplungselemente (24, 26, 28) zur Anbringung eines landwirtschaftlichen Anbaugeräts aufweisen, wobei die beiden Unterlenker (18, 20) über eine mit einer Unterlenkerschwenkachse (38) fluchtende Hubwelle (40) drehbar miteinander gekoppelt sind und sich mittels eines zwischen wenigstens einem der Unterlenker (18, 20) und einer Abstützstelle (46, 48) der Tragestruktur (16) verlaufenden Stellelements (42, 44) gemeinsam um die Unterlenkerschwenkachse (38) in Bezug auf die Tragestruktur (16) verschwenken lassen, wobei es sich bei dem Stellelement (42, 44) um einen hydraulischen Hubzylinder (52, 54) handelt, der mit einem unteren Ende an dem Unterlenker (18, 20) und mit einem oberen Ende an der Abstützstelle (46, 48) der Tragestruktur (16) angelenkt ist, **dadurch gekennzeichnet, dass** die Abstützstelle (46, 48) in Gestalt eines auf einer Oberseite des Differentialgehäuses (68) angebrachten galgenförmigen Halteschenkels (74, 76) ausgebildet ist, an dem der hydraulische Hubzylinder (52, 54) mit seinem oberen Ende eingehängt ist.

2. Kraftheber nach Anspruch 1, **dadurch gekennzeichnet, dass** jeder der beiden Unterlenker (18, 20) um eine senkrecht zur Unterlenkerschwenkachse (38) verlaufende Querachse (56, 58) schwenkbar an der Hubwelle (40) angelenkt ist.

3. Kraftheber nach Anspruch 1 oder 2, **dadurch gekennzeichnet, dass** an wenigstens einem der beiden Unterlenker (18, 20) ein Justiermittel (78) zur Höhenanpassung des Kupplungselements (24, 26) unabhängig von einer mittels des wenigstens einen Stellelements (42, 44) ausgeführten Verschwenkbewegung vorgesehen ist.

4. Kraftheber nach Anspruch 3, **dadurch gekennzeichnet, dass** der wenigstens eine Unterlenker (18, 20) der Länge nach in ein der Tragestruktur (16) zugeordnetes erstes Unterlenkersegment (80) und ein das Kupplungselement (24) tragendes zweites Unterlenkersegment (82) unterteilt ist, wobei sich das zweite Unterlenkersegment (82) mittels des Justiermittels (78) gegenüber dem ersten Unterlenkersegment (80) vertikal verschwenken und in unterschiedlichen Schwenkstellungen arretieren lässt.

5. Kraftheber nach Anspruch 4, **dadurch gekennzeichnet, dass** das Justiermittel (78) zum Verschwenken und Arretieren der beiden Unterlenkersegmente (80, 82) einen selbstblockierenden Spindelantrieb (88) aufweist.

6. Kraftheber nach Anspruch 4, **dadurch gekennzeichnet, dass** das Justiermittel (78) eine lösbare Bolzenverbindung (106) zum Arretieren der beiden Unterlenkersegmente (80, 82) in einer von mehreren festen Schwenkstellungen aufweist.

7. Landwirtschaftlicher Traktor mit einem Kraftheber (10) nach wenigstens einem der Ansprüche 1 bis 6.

## Claims

1. Power lift for an agricultural tractor, having a supporting structure (16) which is able to be mounted on the agricultural tractor (14) and to which left-hand and right-hand lower links (18, 20) and a central upper link (22) are attached in a pivotably movable manner, wherein both the lower links (18, 20) and the upper link (22) have associated coupling elements (24, 26, 28) for attaching an agricultural attachment, wherein the two lower links (18, 20) are coupled together in a rotatable manner via a lifting shaft (40) that is aligned with a lower-link pivot axis (38) and can be pivoted jointly about the lower-link pivot axis (38) with respect to the supporting structure (16) by means of an actuating element (42, 44) extending between at least one of the lower links (18, 20) and a support point (46, 48) of the supporting structure (16), wherein the actuating element (42, 44) is a hydraulic lifting cylinder (52, 54) which is articulated to the lower link (18, 20) by a lower end and to the support point (46, 48) of the supporting structure (16) by an upper end, **characterized in that** support point (46, 48) is configured in the form of a boom-shaped retaining leg (74, 76) that is attached to a top side of the differential housing (68) and on which the hydraulic lifting cylinder (52, 54) is mounted with its upper end.

2. Power lift according to Claim 1, **characterized in that** each of the two lower links (18, 20) is articulated to the lifting shaft (40) so as to be pivotable about a transverse axis (56, 58) extending perpendicularly to the lower-link pivot axis (38).

3. Power lift according to Claim 1 or 2, **characterized in that** an adjusting means (78) for height adaptation of the coupling element (24, 26) independently of a pivoting movement carried out by means of the at least one actuating element (42, 44) is provided on at least one of the two lower links (18, 20).

4. Power lift according to Claim 3, **characterized in that** the at least one lower link (18, 20) is subdivided by length into a first lower-link segment (80) assigned to the supporting structure (16) and a second lower-link segment (82) supporting the coupling element (24), wherein the second lower-link segment (82) can be pivoted vertically with respect to the first lower-link segment (80) by means of the adjusting means (78) and can be locked in different pivoting positions.

5. Power lift according to Claim 4, **characterized in that** the adjusting means (78) has a self-locking spindle drive (88) for pivoting and locking the two lower-link segments (80, 82).

6. Power lift according to Claim 4, **characterized in that** the adjusting means (78) has a releasable bolt connection (106) for locking the two lower-link segments (80, 82) in one of a plurality of fixed pivoting positions.

7. Agricultural tractor having a power lift (10) according to at least one of Claims 1 to 6.

## Revendications

1. Mécanisme de levage pour un tracteur agricole, comprenant une structure porteuse (16) pouvant être montée sur le tracteur agricole (14), sur laquelle sont montés, de manière déplaçable par pivotement, des bras oscillants inférieurs gauche et droit (18, 20) ainsi qu'un bras oscillant supérieur central (22), les bras oscillants inférieurs (18, 20) ainsi que le bras oscillant supérieur (22) présentant des éléments d'accouplement associés (24, 26, 28) pour le montage d'un accessoire agricole, les deux bras oscillants inférieurs (18, 20) étant accouplés l'un à l'autre de manière rotative par le biais d'un arbre de levage (40) en alignement avec un axe de pivotement des bras oscillants inférieurs (38), et pouvant être pivotés conjointement autour de l'axe de pivotement des bras oscillants inférieurs (38) par rapport à la structure porteuse (16) au moyen d'un élément de réglage (42, 44) s'étendant entre au moins l'un des bras oscillants inférieurs (18, 20) et un point d'appui (46, 48) de la structure porteuse (16), l'élément de réglage (42, 44) étant un cylindre de levage hydraulique (52, 54) qui est articulé par une extrémité inférieure au bras oscillant inférieur (18, 20) et par une extrémité supérieure au point d'appui (46, 48) de la structure porteuse (16), **caractérisé en ce que** le point d'appui (46, 48) est réalisé sous la forme d'une branche de retenue (74, 76) montée sur un côté supérieur du carter de différentiel (68), à laquelle le cylindre de levage hydraulique (52, 54) est accroché par son extrémité supérieure.

2. Mécanisme de levage selon la revendication 1, **caractérisé en ce que** chacun des deux bras oscillants inférieurs (18, 20) est articulé au bras de levage (40) de manière à pouvoir pivoter autour d'un axe transversal (56, 58) s'étendant transversalement à l'axe de pivotement du bras oscillant inférieur (38).

3. Mécanisme de levage selon la revendication 1 ou 2, **caractérisé en ce qu'**un moyen d'ajustement (78) pour l'adaptation en hauteur de l'élément d'accouplement (24, 26) indépendamment d'un mouvement de pivotement effectué au moyen de l'au moins un élément de réglage (42, 44) est prévu au niveau d'au moins l'un des deux bras oscillants inférieurs (18, 20).

4. Mécanisme de levage selon la revendication 3, **caractérisé en ce que** l'au moins un bras oscillant inférieur (18, 20) est divisé suivant sa longueur en un premier segment de bras oscillant inférieur (80) associé à la structure porteuse (16) et un deuxième segment de bras oscillant inférieur (82) portant l'élément d'accouplement (24), le deuxième segment de bras oscillant inférieur (82) pouvant pivoter verticalement par rapport au premier segment de bras oscillant inférieur (80) au moyen du moyen d'ajustement (78) et pouvant être bloqué dans différentes positions de pivotement.

5. Mécanisme de levage selon la revendication 4, **caractérisé en ce que** le moyen d'ajustement (78) présente un entraînement à broche autobloquant (88) pour le pivotement et le blocage des deux segments de bras oscillants inférieurs (80, 82).

6. Mécanisme de levage selon la revendication 4, **caractérisé en ce que** le moyen d'ajustement (78) présente une liaison par boulon desserrable (106) pour bloquer les deux segments de bras oscillants inférieurs (80, 82) dans l'une parmi plusieurs positions de pivotement fixes.

7. Tracteur agricole comprenant un mécanisme de levage (10) selon au moins l'une quelconque des revendications 1 à 6.
